# EUROPEAN PATENT APPLICATION

(11) **EP 1 398 775 A2**
(43) Date of publication of application: **17.03.2004**
(21) Application number: 03255567.4
(22) Date of filing: 06.09.2003
(51) Int. Cl.: G11B 7/095, G11B 7/135

(54) **Actuator and optical pickup using the same**

(30) Priority: 13.09.2002 KR 2002055637
(71) Applicant: SAMSUNG ELECTRONICS CO., LTD., Suwon-City, Kyungki-do (KR)
(72) Inventor: Park, Kyung-ui, Seodaemun-gu Seoul (KR); Ryoo, Byung-ryul 337-604 Cheongmyeong Maeul, Paldal-gu Suwon-si Gyeonggi-do (KR); Seong, Pyong-yong, Songpa-gu Seoul (KR); Cho, Myoung-cheol, Seoul (KR); Kim, Ui-yol 336-504 Gwonseon 3-jigu 3-danji, Suwon-si Gyeonggi-do (KR)
(74) Representative: Chugg, David John

(57) **Abstract**

An optical pickup actuator (30) and an optical pickup using the same, wherein the optical pickup actuator (30) has: a lens holder (31), on which an objective lens (50) is mounted; and a tilt photodetector (40), which is installed in the lens holder (31) and receives a portion of light used to record and/or to reproduce information on and/or from a recording medium according to a relative tilt between the objective lens (50) and the recording medium (10). The optical pickup actuator moves the objective lens (50) in a tracking direction, a focusing direction, and a tilting direction. The optical pickup actuator (30) can detect both tilt of the recording medium (10) and tilt of the objective lens (50) using the tilt photodetector (40), so the optical pickup can be applied to an optical recording and/or reproducing apparatus of high-density and/or high-speed.

## Description

The present invention relates to an actuator and an optical pickup using the same, and more particularly, to an actuator suitable for an optical recording and/or reproducing apparatus of high-density and/or high-speed that can detect a relative tilt between an optical disc used as an optical recording medium and an objective lens, and to an optical pickup using the same.

In general, optical pickups are installed in optical recording and/or reproducing apparatuses to record and/or reproduce information on and/or from an optical disc while moving along a radial direction of the optical disc and not contacting the optical disc.

The recent trend is for recording and/or reproducing apparatuses that are miniaturized and lightweight, and require high-density and high-speed optical discs.

For high-density optical discs, if a numerical aperture (NA) of an objective lens used in optical pickups increases, and a wavelength of a light source is decreased, a tilting margin of the optical discs is decreased.

Accordingly, a recent optical recording and/or reproducing apparatus of high-density and/or high-speed indispensably includes an optical pickup having an actuator that corrects a relative tilt between an optical disc and an objective lens, and a tilt servo system.

To correct the relative tilt between the optical disc and the objective lens using the actuator that moves the objective lens in a tilting direction, a tilt of the optical disc and/or a tilt amount of the objective lens, and a tilting direction must be detected.

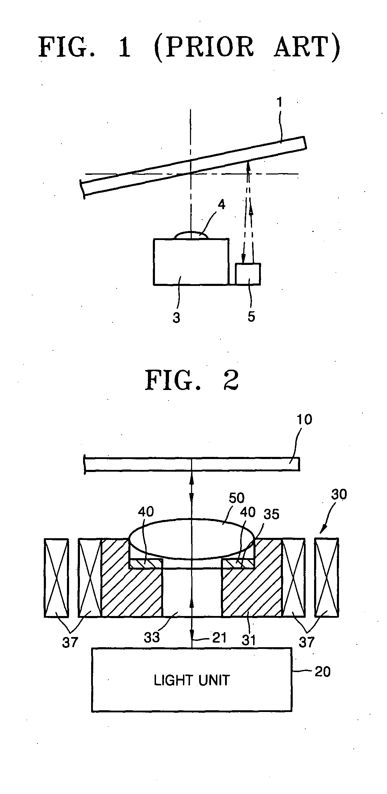

Accordingly, as shown in Figure 1, a general optical recording and/or reproducing apparatus further includes a tilt detecting sensor 5 in addition to an actuator 3.

The tilt detecting sensor 5 includes a light source which is installed to emit light toward an optical disc 1, and a photodetector (not shown) receiving light reflected from the optical disc 1. The amount of light received by the photodetector depends on a tilt amount of the optical disc 1.

But in a case where the tilt detecting sensor 5 is provided in addition to the actuator 3 as described above, it is difficult to detect a tilt of an objective lens 4 when the objective lens 4 is tilted with respect to an optical axis of a center of recording and/or reproducing light.

Embodiments of the present invention aim to provide an actuator suitable for an optical recording and/or reproducing apparatus of high-density and/or high-speed that can detect a tilt of an objective lens as well as a tilt of an optical disc, and provide an optical pickup using the same.

According to the present invention there is provided an apparatus and method as set forth in the appended claims. Preferred features of the invention will be apparent from the dependent claims, and the description which follows.

According to an aspect of the present invention, there is provided an optical pickup actuator moving the objective lens in a tracking direction, a focusing direction, and a tilting direction. The optical pickup actuator has: a lens holder, on which the objective lens is mounted; and a tilt photodetector, which is installed in the lens holder and receives a portion of light used to record information on and/or reproduce information from a recording medium according to a relative tilt between the objective lens and the recording medium, thereby detecting the relative tilt between the objective lens and the recording medium.

According to an aspect, the tilt photodetector is installed at a lower portion of the objective lens.

According to an aspect, the lens holder has a stepped through-hole with a stepped portion, and the tilt photodetector is installed on the stepped portion of the stepped through-hole, so that the tilt photodetector is installed at the lower portion of the objective lens.

According to an aspect, thetilt photodetector has at least two tilt photodetectors, which are disposed in a radial direction of the recording medium, to detect a relative radial tilt between the recording medium and the objective lens; and/or at least two tilt photodetectors, which are disposed in a tangential direction of the recording medium, to detect a relative tangential tilt between the recording medium and the objective lens.

According to an aspect, the tilt photodetectors are disposed on opposing sides of the lower portion of the objective lens along the radial direction and/or the tangential direction of the recording medium, to detect a radial tilting direction and/or a tangential tilting direction.

According to an aspect of the present invention, there is provided an optical pickup. The optical pickup has: a light unit that emits light to record information on and/or reproduce information from a recording medium, and detects light reflected from the recording medium so that an information signal and/or an error signal is detected; an objective lens that focuses light emitted from the light unit and positions a light spot on a recording surface of the recording medium; and an optical pickup actuator moving the objective lens in a tracking direction, a focusing direction, and a tilting direction, and detecting a relative tilt between the objective lens and the recording medium, wherein the optical pickup includes a lens holder, on which the objective lens is mounted, and a tilt photodetector, which is installed in the lens holder and receives a portion of the light according to the relative tilt between the objective lens and the recording medium.

Additional aspects and advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
Figure 1 schematically illustrates a conventional tilt detecting sensor;
Figure 2 schematically illustrates an optical pickup using an actuator according to an embodiment of the present invention;
Figure 3 illustrates a main part of the optical pickup actuator of Figure 2;
Figure 4 illustrates a first example of disposition of tilt photodetectors of the optical pickup actuator of Figure 2;
Figure 5 illustrates a second example of disposition of tilt photodetectors of the optical pickup actuator of Figure 2;
Figure 6 illustrates an optical path of light reflected from an optical disc when an objective lens and the optical disc are not tilted;
Figure 7 illustrates the optical path of light reflected from the optical disc when the objective lens is not tilted and the optical disc is tilted; and
Figure 8 illustrates the optical path of light reflected from the optical disc when the optical disc is not tilted and the objective lens is tilted.

Reference will now be made in detail to the embodiments of the present invention, examples of which are illustrated in the accompanying drawings, wherein like reference numerals refer to the like elements throughout. The embodiments are described below to explain the present invention by referring to the figures.

Optical pickup actuators move an objective lens in a tracking direction, a focusing direction, and/or a tilting direction to position a light spot on a precise location of an optical disc, using light emitted from a light source. A tracking direction movement indicates the adjustment of the objective lens in a radial direction of the optical disc to position the light spot at the center of a track of the optical disc.

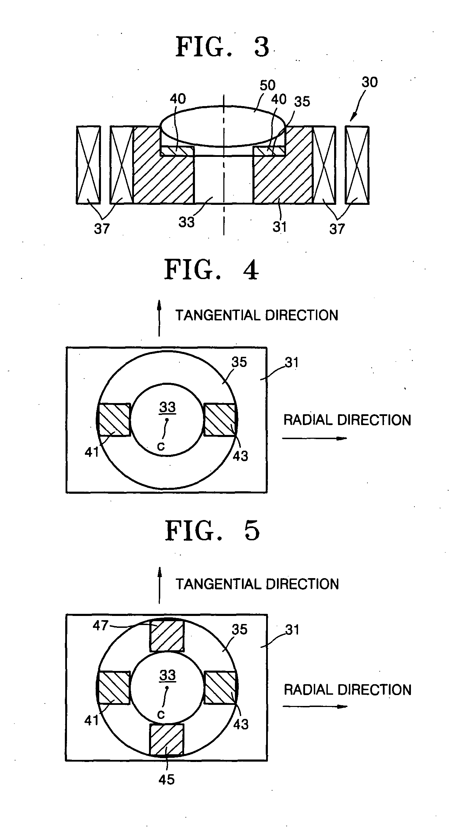

Figure 2 schematically illustrates an optical pickup using an actuator 30 according to an embodiment of the present invention, and Figure 3 illustrates a main part of the optical pickup actuator 30 of Figure 2.

Referring to Figures 2 and 3, the optical pickup has: a light unit 20; an objective lens 50, which focuses light 21 emitted from the light unit 20 and positions a light spot on a recording surface of an optical disc 10; and an actuator 30.

The light unit 20 emits light to record and/or reproduce information on and/or from the optical disc 10, and detects light reflected from the optical disc 10 and then transmitted toward the light unit 20, thereby detecting an information signal and/or an error signal.

Optical structures of components of the optical pickup, including a light source of the light unit 20, can be modified to meet the demands of optical recording and/or reproducing apparatuses in which the optical pickup is used. For example, according to one aspect, when the optical pickup is used in recording and/or reproducing information on and/or from at least some of the CD (compact disc) family of optical discs and/or at least some of the DVD (digital versatile disc) family of optical discs, the light unit 20 is a single light source emitting light of a red wavelength suitable for a DVD. According to another aspect, the light unit 20 has two light sources, emitting light of a red wavelength suitable for a DVD from one of the two light sources, and emitting light of an infrared wavelength suitable for a CD from the remaining one of the two light sources.

Referring to Figure 3, the optical pickup actuator 30 has: a lens holder 31, on which the objective lens 50 is mounted; and a tilt photodetector 40, which is installed on the lens holder 31 and detects a tilt by using the light 21, which is used to record and/or reproduce information on and/or from the optical disc 10. The optical pickup actuator 30 moves the objective lens 50 in a tracking direction, a focusing direction, and a tilting direction.

According to one aspect, the tilt photodetector 40 is installed at a lower portion of the objective lens 50, to detect a relative tilt between the objective lens 50 and the optical disc 10.

As shown in Figure 3, the tilt photodetector 40 is installed at the lower portion of the objective lens 50 by positioning a stepped through-hole 33 in the lens holder 31, and installing the tilt photodetector 40 in a stepped portion 35 of the stepped through-hole 33.

The optical pickup actuator 30 has at least two tilt photodetectors.

Figure 4 illustrates a first example of disposition of tilt photodetectors in the optical pickup actuator 30.

As shown in Figure 4, the optical pickup actuator 30 is configured such that two tilt photodetectors 41 and 43 are disposed in a radial direction of the optical disc 10.

According to one aspect, the tilt photodetectors 41 and 43 are disposed symmetrically with respect to a central optical axis C of the optical pickup, that is, right and left sides of the lower portion of the objective lens 50, along the radial direction of the optical disc 10. If the tilt photodetectors 41 and 43 are disposed as described above, an occurrence of the radial tilt can be determined. Further, a direction of radial tilt can be determined.

The optical pickup actuator 30 has a magnetic circuit 37 to move the objective lens 50 in the tracking direction, the focusing direction, and the tilting direction.

According to one aspect, when the tilt photodetectors 41 and 43 are disposed along the radial direction of the optical disc 10 to detect the radial tilt, as shown in Figure 4, the magnetic circuit 37 includes a triaxial movement. The triaxial movement has a focusing direction movement, a tracking direction movement, and a radial tilting direction movement.

As previously noted, according to one aspect, the tilt photodetectors 41 and 43 are disposed along the radial direction of the optical disc 10, as illustrated in Figure 4 and in the first example, but according to another aspect, the tilt photodetectors 41 and 43 are disposed in a tangential direction to the optical disc 10, to detect a tangential tilt. The magnetic circuit 37 is configured such that the objective lens 50 is moved in the tracking direction, the focusing direction, and the tangential tilting direction.

Figure 5 illustrates a second example of a disposition of tilt photodetectors in the optical pickup actuator 30.

As shown in Figure 5, two tilt photodetectors 41 and 43 are disposed in the radial direction of the optical disc 10, and two tilt photodetectors 45 and 47 are disposed in the tangential direction of the optical disc 10, thereby detecting both a radial tilt and a tangential tilt.

According to one aspect, the tilt photodetectors 41 and 43 to detect the radial tilt, are disposed symmetrically with respect to the central optical axis C of the optical pickup, along the radial direction of the optical disc 10. Further, the tilt photodetectors 45 and 47 to detect the tangential tilt are disposed symmetrically with respect to the central optical axis C of the optical pickup, along the tangential direction of the optical disc 10.

When the tilt photodetectors 41 and 43 to detect the radial tilt, and the tilt photodetectors 45 and 47 to detect the tangential tilt, are disposed as described above, the occurrence of radial tilt and tangential tilt can be determined. Further, the directions of radial tilt and tangential tilt can be determined.

When the four tilt photodetectors 41, 43, 45 and 47 are disposed along the radial direction and the tangential direction of the optical disc 10 to detect radial tilt and tangential tilt, as shown in Figure 5, according to one aspect, the magnetic circuit 37 includes a quadriaxial movement. The quadriaxial movement has the focusing direction movement, the tracking direction movement, the radial tilting direction movement, and a tangential direction movement.

Whether the optical pickup actuator 30 has a triaxial or quadriaxial movement, depends on the configuration of the magnetic circuit 37. Accordingly, the optical pickup actuator 30 that has a tilt photodetector to detect radial tilt or a tilt photodetector to detect tangential tilt has a triaxial movement. And the optical pickup actuator 30 that has a tilt photodetector to detect radial tilt and a photodetector to detect tangential tilt has a quadriaxial movement.

Since the triaxial and quadriaxial movements are well known to those of ordinary skill in the art, their descriptions will be omitted.

The optical pickup actuator 30 has a supporting member (or suspension), which supports the lens holder 31 and allows movement of the lens holder 31 on a base (not shown). Further, the optical pickup actuator 30 is configured such that the lens holder 31, on which the objective lens 50 (or moving unit) is placed, and a portion of the magnetic circuit 37 installed in the lens holder 31, are moved on the base in the focusing direction, the tracking direction, and the tilting direction. Since the general structure of the optical pickup actuator 30 is well known to those of ordinary skill in the art, a description thereof will be omitted.

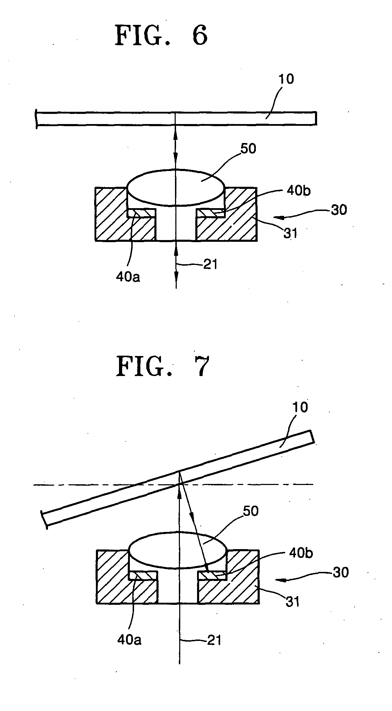

Hereinafter, a method to determine tilt of the optical disc 10 or the objective lens 50, will be described with reference to Figures 6 through 8. Two tilt photodetectors 40a and 40b are disposed symmetrically with respect to the central optical axis C of the optical pickup, that is, the central optical axis of light 21, along the radial direction and/or the tangential direction of the optical disc 10. Light 21 is emitted from the light unit 20 and then travels toward the objective lens 50.

As shown in Figure 6, when the optical pickup actuator 30, or more precisely, both the objective lens 50 and the optical disc 10, are not tilted, light 21 which is emitted from the light unit 20, focused by the objective lens 50, and is incident on the optical disc 10, is reflected from the optical disc 10, and returns to the light unit 20 along its original path, so that no light signals are detected by the tilt photodetectors 40a and 40b.

However, as shown in Figure 7, when the objective lens 50 is not tilted, but the optical disc 10 is tilted, a portion of the light 21 reflected from the optical disc 10 travels toward the tilt photodetector 40b, due to the tilt of the optical disc 10, and a light signal is detected in the tilt photodetector 40b. When the optical disc 10 is tilted in a direction opposite to a tilting direction shown in Figure 7, a light signal is detected in the tilt photodetector 40a.

A tilt amount of the optical disc 10 is determined from amplitudes of light signals detected in the tilt photodetectors 40a and 40b, and a tilting direction of the optical disc 10 is determined from a difference in the amplitudes of the light signals detected in the tilt photodetectors 40a and 40b. Thus, a driving signal in the tilting direction is applied to the magnetic circuit 37 of the actuator 30 using the amplitudes of the detected light signals, and the difference between the amplitudes of the detected light signals, so that the objective lens 50 is moved in a tilting direction corresponding to the tilting of the optical disc 10 shown in Figure 7. Consequently, the tilt of the optical disc 10 is compensated for in such a way that the relative tilt between the optical disc 10 and the objective lens 50 is removed.

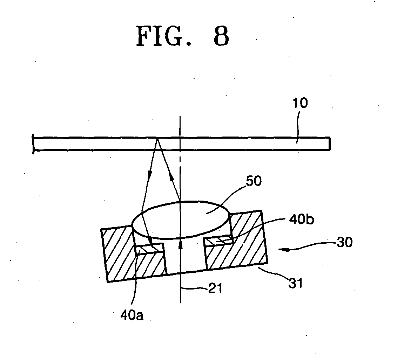

As shown in Figure 8, when the optical disc 10 is not tilted but the objective lens 50 is tilted, a portion of the light 21 reflected from the optical disc 10 travels toward the tilt photodetector 40a due to the tilt of the objective lens, and a light signal is detected in the tilt photodetector 40a. When the objective lens 50 is tilted in a direction opposite to a tilting direction shown in Figure 8, a light signal is detected by the tilt photodetector 40b.

Similar to the tilt of the optical disc 10, a tilt amount of the objective lens 50 is determined from the amplitudes of light signals detected in the tilt photodetectors 40a and 40b, and a tilting direction of the objective lens 50 is determined from a difference in the amplitudes of the light signals detected in the tilt photodetectors 40a and 40b. Thus, a driving signal in the tilting direction is applied to the magnetic circuit 37 of the actuator 30 using the amplitudes of the detected light signals and the difference between the amplitudes of the detected light signals, so that the objective lens 50 is moved in a tilting direction opposite to the tilting direction shown in Figure 8, and the tilt of the objective lens 50 is compensated for in such a way that a relative tilt between the optical disc 10 and the objective lens 50 is removed. Here, the tilt compensation of the objective lens 50 may be performed by adjusting the entire skew of the optical pickup.

Figures 7 and 8 exaggeratingly show an optical path of the light reflected from the optical disc 10 to explain the respective tilts of the optical disc 10 and the objective lens 50. In fact, the respective tilts of the optical disc 10 and the objective lens 50 are much less than those shown in Figures 7 and 8, and only a portion of the light reflected from the optical disc 10 is received by the tilt photodetectors 40a and 40b.

As can be seem from Figures 6 through 8, in the actuator 30 and the optical pickup using the same, the tilt of the optical disc 10 and the tilt of the objective lens 50 is determined. That is, the relative tilt between the optical disc 10 and the objective lens 50 is determined.
As shown in Figure 4, in the case where the tilt photodetectors 41 and 43 are provided to detect radial tilt and the radial tilting direction and the magnetic circuit 37 performs the triaxial movement including the radial tilting direction movement, the actuator 30 and the optical pickup using the same corrects a relative radial tilt between the optical disc 10 and the objective lens 50.

In the case where the tilt photodetectors 41 and 43 are provided to detect tangential tilt and the tangential tilting direction and the magnetic circuit 37 performs the triaxial movement including the tangential tilting direction movement, the actuator 30 and the optical pickup using the same corrects a relative tangential tilt between the optical disc 10 and the objective lens 50.

As shown in Figure 5, in the case where the tilt photodetectors 41, 43, 45, and 47 are provided to detect radial tilt, the radial tilting direction, tangential tilt, and the tangential tilting direction, and the magnetic circuit 37 performs the quadriaxial movement including the radial tilting direction movement and the tangential tilting direction movement, the actuator 30 and the optical pickup using the same corrects the relative radial tilt and/or the relative tangential tilt between the optical disc 10 and the objective lens 50.

According to preferred embodiments of the present invention, the tilt of the optical disc 10 and the tilt of the objective lens 50 (that is, the tilt of the actuator 30) is detected by a single tilt detecting system. Also, the relative radial tilt and/or the relative tangential tilt between the optical disc 10 and the objective lens 50 is corrected using the single tilt detecting system.

Hence, if the present invention is applied to a high-density and/or high multiple-speed optical recording and/or reproducing apparatus, for example, an optical recording and/or reproducing apparatus which records and/or reproduces several optical discs, including a DVD-RAM, a tilt servo system can be implemented.

As described above, since an actuator according to an embodiment of the present invention and an optical pickup using the same can detect a relative tilt between an optical disc and an objective lens, that is, a tilt of the optical disc and a tilt of the objective lens, by using photodetectors for tilt detection installed in a lens holder of the actuator, the optical pickup according to an embodiment of the present invention can be applied to optical recording and/or reproducing apparatuses of high-density and/or high-speed.

It will be appreciated that whilst the invention has generally been described in relation to a particular optical media it can be applied to combined systems e.g. for joint DVD/CD reading/writing. In such cases, the light unit (20) may comprise a pair or more of light sources of suitable wavelength (e.g. red for DVD, infra red for CD).

Further, since the relative tilt between the optical disc and the objective lens can be detected using recording and/or reproducing light, an additional light source for tilt detection is not required, and manufacturing costs of the optical pickup can be reduced. Although a few embodiments of the present invention have been shown and described, it would be appreciated by those skilled in the art that changes may be made in this embodiment without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical pickup actuator (30) arranged for moving an objective lens (50) in a tracking direction, a focusing direction, and a tilting direction, the optical pickup actuator (30) comprising:
a lens holder (31), on which the objective lens (50) is mounted; and
a tilt photodetector (40), which is installed in the lens holder (31) and receives a portion of light used to record information on and/or reproduce information from a recording medium (10) according to a relative tilt between the objective lens (50) and the recording medium (10), thereby detecting the relative tilt between the objective lens (50) and the recording medium (10).

2. An optical pickup comprising:
a light unit (20) that emits light to record information on and/or reproduce information from a recording medium (10), and detects light reflected from the recording medium (10) so that an information signal and/or an error signal is detected;
an objective lens (50) that focuses light emitted from the light unit (20) and positions a light spot on a recording surface of the recording medium (10); and
an optical pickup actuator (30) arranged for moving the objective lens (50) in a tracking direction, a focusing direction, and a tilting direction and detecting a relative tilt between the objective lens (50) and the recording medium (10),
wherein the optical pickup includes
a lens holder (31), on which the objective lens (50) is mounted, and
a tilt photodetector (40), which is installed in the lens holder (31) and receives a portion of the light according to the relative tilt between the objective lens (50) and the recording medium (10).

3. The optical pickup actuator of claim 1 or optical pickup of claim 2, wherein:
the tilt photodetector (40) is installed at a lower portion of the objective lens (50).

4. The optical pickup actuator or optical pickup of claim 3, wherein:
the lens holder (31) has a stepped through-hole (33) with a stepped portion; and
the tilt photodetector is installed on the stepped portion (35) of the stepped through-hole (30) so that the tilt photodetector (40) is installed at the lower portion of the objective lens (50).

5. The optical pickup actuator of any of claims 1, 3, or 4 or optical pickup of any of claims 2, 3 or 4, wherein the tilt photodetector (40) comprises:
at least two tilt photodetectors (41, 43), which are disposed in a radial direction of the recording medium (10), to detect a relative radial tilt between the recording medium (10) and the objective lens (50).

6. The optical pickup actuator of any of claims 1, 3, 4 or 5 or the optical pickup of any of claims 2 to 5, wherein the tilt detector comprises at least two tilt photodetectors (41, 45; 43, 47), which are disposed in a tangential direction of the recording medium (10), to detect a relative tangential tilt between the recording medium (10) and the objective lens (50).

7. The optical pickup actuator or optical pickup of claim 5 or 6, wherein:
the tilt photodetectors (41, 43, 45, 47) are disposed on opposing sides of the lower portion of the objective lens (50) along the radial direction and/or the tangential direction of the recording medium, to detect a radial tilting direction and/or a tangential tilting direction.

8. An optical pickup, comprising:
a light unit (20) that emits light to record information on and/or read information from a recording surface of an optical disc (10);
a lens (500 that focuses the light on the recording surface; and
an actuator (30) that uses the light reflected from the recording surface to determine a relative tilt between the lens (50) and the recording surface.

9. The optical pickup according to claim 8, wherein the light unit (20) comprises:
a single light source,
wherein the light emitted is of a red wavelength suitable for a DVD.

10. The optical pickup according to claim 8, wherein the light unit (20) comprises:
two light sources,
wherein the light emitted by one of the two light sources is of a red wavelength suitable for a DVD, and the light emitted by the remaining one of the two light sources is of an infrared wavelength suitable for a CD.

11. The optical pickup according to claim 8, 9 or 10, wherein the actuator (30) comprises:
a lens holder (31), holding the lens (50); and
a photodetector (40) installed on the lens holder (31), that uses the light reflected from the recording surface to determine a relative tilt between the lens (50) and the recording surface.

12. The optical pickup according to claim 11, wherein:
the photodetector (40) is installed at a lower portion of the lens (50).

13. The optical pickup according to claim 12, wherein:
the lens holder (31) has a stepped through hole (33) with a stepped portion (35); and
the photodetector (40) is installed on the stepped portion (35).

14. The optical pickup according to claim 11, wherein the actuator comprises:
at least two photodetectors (41, 43).

15. The optical pickup according to claim 14, wherein:
the at least two photodetectors (41, 43) are disposed symmetrically with respect to a central optical axis of the optical pickup.

16. The optical pickup according to claim 15, wherein:
the relative tilt between the (50) lens and the recording surface is determined by an amplitude of the light received by the at least two photodetectors (41, 43); and
a direction of relative tilt between the lens (50) and the recording surface is determined by a difference of the amplitude of the light received by each of the at least two photodetectors (41, 43).

17. The optical pickup according to claim 16, wherein: the at least two photodetectors (41, 43) are disposed along a first direction.

18. The optical pickup according to claim 17, wherein the actuator (30) comprises:
a first pair of photodetectors (41, 43) disposed symmetrically with respect to a central optical axis of the optical pickup along a first direction;
a second pair of photodetectors (45, 47) disposed symmetrically with respect to the central optical axis of the optical pickup along a second direction;
the relative tilt between the lens (50) and the recording surface is determined by an amplitude of the light received by the first and second pairs of photodetectors (41-47); and
a direction of relative tilt between the lens (50) and the recording surface is determined by a difference of the amplitude of the light received by each photodetector of the first and second pairs of photodetectors (41-47).

19. The optical pickup according to claim 18, wherein: the first direction and the second direction are approximately perpendicular to each other.

20. The optical pickup according to any of claims 8 to 19, wherein the actuator (30) further comprises:
a magnetic circuit (37) to move the lens (50) and correct the relative tilt between the lens (50) and the recording surface.

21. The optical pickup according to claim 16, wherein:
the actuator (30) further comprises a magnetic circuit (37) to move the lens (50) and correct the relative tilt between the lens (50) and the recording surface; and
the magnetic circuit comprises a triaxial movement.

22. The optical pickup according to claim 18, wherein:
the actuator (30) further comprises a magnetic circuit (37) to move the lens (50) and correct the relative tilt between the lens (50) and the recording surface; and
the magnetic circuit comprises a quadriaxial movement.

23. An optical pickup actuator (30) to move an objective lens (50), comprising:
a lens holder (31), holding the objective lens (50);
a photodetector (40) installed on the lens holder (31), that detects light reflected from a recording surface of an optical disc (10), to determine a relative tilt between the objective lens (50) and the recording surface: and
a magnetic circuit (37) to move the lens (50) and correct the relative tilt between the lens (50) and the recording surface,
wherein the light detected by the photodetector (40) is used in writing information to and/or reading information from the recording surface.

24. An apparatus to correct a relative tilt between a lens (50) and a recording surface, comprising:
an actuator (30) that receives light that is used in writing information to and/or reading information from the recording surface, and is reflected from the recording surface, to determine the relative tilt between the lens (50) and the recording surface; and
a magnetic circuit (37) to move the lens (50) and correct the relative tilt between the lens (50) and the recording surface.

25. An apparatus to detect a relative tilt between a lens (50) and a recording surface, comprising:
a lens holder (31), on which the lens is mounted; and
a photodetector (40), which is installed on the lens holder (31) and determines the relative tilt using light used to record information on and/or reproduce information from the recording surface.

26. A method to determine a relative tilt between a lens (50) and a recording surface, comprising:
emitting light from a light unit (20) to write information to and/or read information from the recording surface;
focusing the light on the recording surface using the lens (50);
receiving the light in a photodetector (10) after the light reflects from the recording surface; and
using an amplitude of the light received by the photodetector (40) to determine the relative tilt between the lens (50) and the recording surface.

27. A method to reduce a manufacturing cost of an optical pickup, comprising:
determining a relative tilt between a lens (50) and a recording surface using a light used to record information on and/or reproduce information from the recording surface.
